# EUROPÄISCHE PATENTSCHRIFT

(11) **EP 2 561 416 B1**
(45) Veröffentlichungstag und Bekanntmachung des Hinweises auf die Patenterteilung: **11.12.2019**
(21) Anmeldenummer: 11713801.6
(22) Anmeldetag: 12.04.2011
(51) Int. Cl.: G05B 19/4093

(54) **NC-PROGRAMM UND VERFAHREN ZUR VEREINFACHTEN NACHPRODUKTION AN EINER WERKZEUGMASCHINE**
NC PROGRAM AND METHOD FOR SIMPLIFIED POST-PRODUCTION ON A MACHINE TOOL
PROGRAMME NC ET PROCÉDÉ PERMETTANT DE SIMPLIFIER LA POST-PRODUCTION SUR UNE MACHINE-OUTIL

(30) Priorität: 22.04.2010 DE 102010028135
(43) Veröffentlichungstag der Anmeldung: 27.02.2013
(73) Patentinhaber: Trumpf Werkzeugmaschinen GmbH + Co. KG, 71254 Ditzingen (DE)
(72) Erfinder: BAIERL-MÖHLER, Monika, 71735 Nussdorf (DE); BAUER, Klaus, 71254 Ditzingen (DE); BRANDT, Sascha, 71263 Weil der Stadt (DE); DONATZER, Mirko, 71277 Rutesheim (DE); NOTHDURFT, Götz, 70597 Stuttgart (DE); SCHMID, Hans-Jörg, 70839 Gerlingen (DE); WOLF, Thomas, 74321 Bietigheim-Bissingen (DE)
(74) Vertreter: Kohler Schmid Möbus Patentanwälte
(86) Internationale Anmeldenummer: PCT/EP2011/055663
(87) Internationale Veröffentlichungsnummer: WO 2011/131509

(56) Entgegenhaltungen:
- EP-A1- 0 642 066
- EP-A1- 2 105 815
- EP-A2- 0 939 356
- WO-A2-03/023545
- DE-A1- 19 856 116
- US-A1- 2004 083 023
- US-A1- 2005 171 629
- US-B2- 7 661 073

## Beschreibung

Die Erfindung betrifft ein NC-Programm ausgeführt auf einer Laser-, Stanz- oder Laser-Stanz-Kombinationsmaschine zum Bearbeiten mehrerer unterschiedlicher Werkstückteile aus einem flachen Ausgangsmaterial, insbesondere Blechen, mittels mehrerer unterschiedlicher Werkzeuge, wobei das NC-Programm ein NC-Fertigungsprogramm mit den zum Fertigen der Werkstückteile erforderlichen NC-Programmschritten aufweist, sowie ein Verfahren zum Erstellen eines neuen NC-Nachproduktionsprogramms für ein oder mehrere nachzuproduzierende Werkstückteile auf der Werkzeugmaschine und ein zugehöriges Computerprogrammprodukt.

Die Themen Werkstattprogrammierung und Nachproduktion spielen bereits seit langem eine große Rolle im Werkzeugmaschinenumfeld. Auf Grund der Komplexität der Bearbeitung mittels Werkzeugmaschinen kommt es immer wieder zu Fehlern im Produktionsablauf. Beispielsweise können bei der Laserbearbeitung durch eine falsche Fokuslage schlecht oder unvollständig geschnittene Werkstückteile produziert werden, oder beim Einsatz von Signier- oder Stempelwerkzeugen kann auf Grund einer falschen Höheneinstellung eine zu schwache oder zu starke Signatur eingeprägt werden. In diesem Fall ist es notwendig, die schlechten Teile nach Behebung des Fehlers erneut in guter Qualität zu produzieren, um den Bearbeitungsauftrag korrekt abschließen zu können. Es ist auch möglich, dass der Kunde die geforderte Zahl an Werkstückteilen erhöht, nachdem das NC-Programm für die Bearbeitung bereits vom CAD/CAM-Programmiersystem an die Werkzeugmaschine weitergeleitet wurde. Um diese ausstehenden Werkstückteile zu produzieren, kann der Programmierer des CAD/CAM-Programmiersystems die Aufgabe erhalten, diese fehlenden Werkstückteile in einen späteren Bearbeitungsauftrag einzufügen. Da Werkzeugmaschinen oft eine Vielzahl von Bearbeitungsaufträgen in der Warteschlange haben, ist es möglich, dass sich der Abschluss des Kundenauftrags verzögert. Daher ist es wichtig für den Bediener, die Möglichkeit der Werkstattprogrammierung zu haben, um eine sofortige Nachproduktion selbst programmieren und starten zu können.

Aus dem Stand der Technik ist bekannt, dass der Bediener einer Werkzeugmaschine, insbesondere einer Laser-, Stanz- oder Laser-Stanz-Kombinationsmaschine, über eine Netzwerkverbindung auf einen Computer mit einem installierten CAD/CAM-Programmiersystem zugreift und dort alle Schritte zur Programmierung einer neuen Blechtafel mit Werkstückteilen erneut ausführt.

Zunächst öffnet der Bediener beispielsweise eine Remote Desktop-Verbindung zum Netzwerkcomputer und startet dort das CAD/CAM-Programmiersystem. Anschließend gibt er an, welche Art von Blechtafel er für die Bearbeitung verwenden möchte, d.h. Material und Dicke, und sucht danach die Dateien mit den Geometrien der einzelnen, erneut zu produzierenden Teile. Dabei muss er vor allem bei der Produktion von sehr ähnlichen Teilen darauf achten, dass er das Teil mit den korrekten Maßen auswählt. Sobald er die Teile gefunden hat, gibt er an, wie viele er davon jeweils erneut produzieren möchte, und verschachtelt diese auf der Tafel, d.h. ordnet sie entweder manuell oder mit Hilfe eines Schachtelprogramms automatisch möglichst platzsparend auf der Blechtafel an. Im Folgenden können ebenfalls manuell oder automatisiert die Bearbeitungsschritte zur Herstellung der Gutteile und deren Entladungsart gewählt werden, d.h. es wird gewählt, welche Werkzeuge, z.B. verschieden geformte Stanzwerkzeuge und/oder Laser, für die Bearbeitung des Blechs verwendet werden. Insbesondere beim Stanzen kann eine Vielzahl verschieden geformter Werkzeuge zum Produzieren des gleichen Gutteils verwendet werden.

Entscheidend ist auch die Reihenfolge der Bearbeitung, da diese festlegt, ob eine automatische Entladung möglich ist oder nicht. Es muss z.B. berücksichtigt werden, dass mit dem letzten Bearbeitungsschritt, dem Freitrennen des Werkstückteils, dieses auf einer Entladeklappe oder unter dem Stanz- bzw. Laserkopf erreichbar für den Bediener oder eine Entladevorrichtung zum Liegen kommt.

Wenn die Bearbeitungsreihenfolge und Art der Entladung für alle Gutteile festgelegt wurde, erzeugt das CAD/CAM-Programmiersystem ein neues NC-Programm für die Nachproduktion. Dieses NC-Nachproduktionsprogramm muss nun noch über die Netzwerkverbindung vom Rechner des CAD/CAM-Programmiersystems auf den Steuerungscomputer der Werkzeugmaschine übertragen und zur erneuten Abarbeitung gestartet werden.

Dieses Verfahren ist für einen Maschinenbediener an der Werkzeugmaschine nur schwer durchzuführen, da dieser z.T. nur eingeschränkte Bedienmöglichkeiten hat, z.B. durch einen Touchscreen anstelle von Maus und Tastatur, und das MMC-Bediensystem im Allgemeinen auch nicht für das Durchführen von lang andauernden Büroarbeiten ausgelegt ist.

Aus dem Stand der Technik (z.B. US 7 661 073 B2) ist bekannt, die Bedienungselemente des MMC-Bediensystems anzupassen, um die eingeschränkten oder anders als an einem Bürorechner ausgeführten Bedienungsarten in der Anwendung zu erleichtern. In EP 0 642 066 A1 wurde ein Programmiersystem für eine Werkzeugmaschine dahingehend verbessert, dass das Programmiersystem dialogorientiert aufgebaut wurde. Dies erleichtert die Arbeit des Bedieners, wenn beispielsweise nur ein Touchscreen zur Eingabe zur Verfügung steht, oder der Bediener mit dem komplexen Programmiersystem nur wenig vertraut ist. Trotz dieser Verbesserungen muss ein Bediener jedoch seit Jahrzehnten im Wesentlichen den kompletten Arbeitsablauf zur Programmierung einer Blechtafel wiederholen, wenn er ein neues NC-Programm für die Nachproduktion erstellen möchte.

WO 03/023545 A2 offenbart einen die Daten einer CNC-Steuerung symbolisierenden Block, der alle für die NC-Bearbeitung notwendigen Daten (Platz- und Werkzeugdaten) zusammen in einem kombinierten Werkzeug-/Platz-Datensatz enthält. Dieser Datensatz eines Werkzeugs kann während der Werkstückbearbeitung auf einer NC-Maschine verändert und durch eine Upload-Funktion in der Werkzeugverwaltung aktualisiert werden. Die für die NC-Bearbeitung notwendigen Daten entsprechen somit einem herkömmlichen NC-Fertigungsprogramm, das alle zum Fertigen der Werkstückteile erforderlichen NC-Programmschritten aufweist.

EP 0 939 356 A2 und EP 2 105 815 A1 offenbaren ebenfalls ein NC-Fertigungsprogramm, das alle zum Fertigen der Werkstückteile erforderlichen NC-Programmschritte aufweist.

Die Aufgabe der Erfindung besteht darin, das Erstellen von neuen NC-Nachproduktionsprogrammen direkt nach der eigentlichen Produktion für den Bediener schneller durchführbar zu machen und Fehlerquellen zu minimieren.

Die Aufgabe wird erfindungsgemäß durch ein NC-Programm gelöst, das zusätzlich zum NC-Fertigungsprogramm für alle seine produzierbaren unterschiedlichen Werkstückteile jeweils einen extrahierbaren Datensatz in Form von Einzelteil-NC-Codes aufweist, in dem die für die Nachproduktion eines einzelnen solchen Werkstückteils notwendigen Arten von Werkzeugen und Werkzeugschritte einschließlich der zugehörigen Bearbeitungsparameter hinterlegt sind.

Sollte eine Nachproduktion notwendig werden, liegen bei Einzelteil-NC-Codes die für die Erstellung eines NC-Nachproduktionsprogramms erforderlichen Informationen zum großen Teil bereits in Form von NC-Daten vor. Das NC-Programm für die Nachproduktion muss somit nur noch zu einem geringen Anteil neu erstellt werden, da es für die Bearbeitungsschritte jedes nachzuproduzierenden Werkstücks bereits NC-Code gibt. Diese NC-Codes können, falls erwünscht, noch bearbeitet werden, beispielsweise um die Winkellage oder Entsorgung anzupassen; ein Großteil des NC-Nachproduktionsprogramms lässt sich jedoch durch einfaches Kombinieren von Einzelteil-NC-Codes erhalten. Da für die Nachproduktion zumeist wenige Werkstückteile gefertigt werden, lohnt sich das zeitaufwändige Erstellen eines zeitoptimierten NC-Nachproduktionsprogramms nach dem Stand der Technik nicht. Des Weiteren kann der Maschinenbediener die Werkstückteile für die Nachproduktion schneller und einfacher aus der begrenzten Anzahl an verschiedenen Werkstückteilen auswählen, die als extrahierbare Datensätze bzw. Einzelteil-NC-Codes im aktuellen NC-Programm enthalten sind, als wenn er diese, womöglich aus einer Vielzahl ähnlicher Werkstückteilgeometriedaten, auf der CAD-Datenablage suchen muss. Alternative Lösungen, ein NC-Nachproduktionsprogramm aus einem NC-Programm nach dem Stand der Technik zu erstellen, sind wesentlich schwieriger zu bewerkstelligen. Bereits das Identifizieren der produzierten Gutteile auf der Blechtafel würde daran scheitern, dass ohne zusätzliche Informationen die Zuordnung oftmals nicht eindeutig möglich ist, welche produzierten Werkstückteile Gutteile und welche Abfall sind, besonders wenn es sich bei den Werkstückteilen um solche mit offenen Konturen, ineinander verschachtelten oder mit gemeinsamen Trennschnitten versehene handelt. Durch die erfindungsgemäße Lösung erspart sich der Maschinenbediener für die Erstellung des NC-Nachproduktionsprogramms das Verwenden der CAD-Programmierung.

Die Identifizierung der nachzuproduzierenden Gutteile wird für den Maschinenbediener vorteilhafterweise dadurch erleichtert, dass die extrahierbaren Datensätze jedes unterschiedlichen Werkstückteils eine geschlossene äußere Kontur für die Bearbeitung aufweisen, wodurch die Identifizierung von Gutteilen und Abfallstücken vereinfacht wird und auch immer eindeutig ist. Weiter ist es von Vorteil, wenn dem NC-Programm zusätzlich noch Werkstückteilgeometriedaten zu jedem extrahierbaren Datensatz bzw. Einzelteil-NC-Code hinzugefügt werden, wodurch die Identifizierung für den Maschinenbediener noch einmal vereinfacht wird. Des Weiteren bewirkt die geschlossene Kontur, dass das Werkstückteil einfach auf beliebigen Blechen hergestellt werden kann. Es ist z.B. nicht notwendig, dass die Außenkontur eines Werkstückteils, von der eine oder mehrere Seiten in der ursprünglichen Produktion dem Rand des Bleches entsprachen, nun wieder am Rand des Bleches hergestellt werden müssen. Somit kann auch eine Blechtafel ohne hochwertige Kante für die Nachproduktion verwendet werden.

Ein CAM-Programmiersystem weist ein Unterprogrammiersystem zum Erstellen der oben beschriebenen extrahierbaren Datensätzen und zum Erstellen eines NC-Programms mit solchen extrahierbaren Datensätzen und/oder ein Nachproduktionsuntersystem zum Erstellen eines neuen NC-Nachproduktionsprogramms aus einem NC-Programm mit solchen extrahierbaren Datensätzen auf. Das Untersystem besteht folglich aus zwei Teilen, die auch getrennt voneinander arbeiten können. Der eine Teil des Untersystems sorgt dafür, dass das CAM-System beim Erstellen des NC-Programms zusätzlich zu dem NC-Programm nach dem Stand der Technik noch extrahierbare Datensätze erzeugt und anhängt. Es ist von Vorteil dies an dieser Stelle zu bewerkstelligen, da hier neben dem NC-Programm für die Bearbeitung der Blechtafel auch die CAD-Datensätze verfügbar sind, was die Einzelteilidentifikation und die Erstellung von extrahierbaren Datensätzen bzw. Einzelteil-NC-Codes vereinfacht.

Der andere Teil des Untersystems extrahiert die zusätzlichen Datensätze des NC-Programms und stellt die darin enthaltenen Daten bzw. NC-Code, gegebenenfalls nach einer Anpassung, z.B. von Entladung oder Winkellage, dem CAM-System zur Erzeugung eines NC-Nachproduktionsprogramms zur Verfügung, wodurch vorteilhafterweise Zugriffe und Suchen auf der CAD-Datenablage vermieden werden. Dieser Teil des Nachproduktionsuntersystems kann vorteilhafterweise im ursprünglich verwendeten CAD/CAM-Programmiersystem im Netzwerk integriert sein, wodurch die Installation und Wartung zusätzlicher Software auf dem MMC-Bediensystem vermieden werden, was insbesondere im Hinblick auf die vielen unterschiedlichen, verwendeten Computer- und Betriebssysteme hilft, Kompatibilitätsprobleme zu vermeiden. Wenn allerdings ohnehin schon ein CAD/CAM-Programmiersystem auf dem Steuerungscomputer installiert ist, ist es von Vorteil, wenn das Untersystem in dieses integriert wird, wodurch kein zusätzliches Programm auf dem Steuerungscomputer notwendig ist. Ein eigenständiges CAM-Programmiersystem für die Nachproduktion hat den Vorteil, dass es ein wesentlich kleineres Computerprogramm ist als ein umfassendes CAM- oder CAD/CAM-Programmiersystem, so dass auch leistungsschwache Steuerungscomputer diese ausführen können. Somit können auch Steuerungscomputer ohne Netzwerkanbindung ein NC-Programm für die Nachproduktion erstellen. Ein Steuerungscomputer mit Netzwerkanbindung spart sich den Aufbau einer Netzwerkverbindung zu einem Computer mit CAD/CAM-Programmiersystem und vermeidet so auch, dass eine Nachproduktion nicht starten kann, weil beispielsweise die Lizenz für das CAD/CAM-Programmiersystem bereits in Benutzung ist.

Es ist es von Vorteil, wenn das Nachproduktionsuntersystem einen Abfrageschritt zum Auswählen des oder der nachzuproduzierenden Werkstückteile anhand der extrahierten Datensätze aufweist, da dies die Auswahl des oder der richtigen nachzuproduzierenden Werkstückteile einfach und komfortabel macht. Dem Bediener wird die Auswahl besonders vereinfacht, wenn für die Erstellung einer Auswahlliste auch die Werkstückteilgeometriedaten mit dem NC-Programm mitgeliefert und verwendet werden. Die auswählbaren Werkstückteile können dabei in einer Auswahlliste oder direkt in einem Tafelbild der bearbeiteten Blechtafel angewählt werden. Der Maschinenbediener muss die passenden CAD-Datensätze nicht wie bisher aus der Vielzahl der auf der CAD-Ablage gespeicherten CAD-Datensätze heraussuchen.

Ebenfalls von Vorteil ist es, die Größe des zu verwendenden Bleches bzw. Ausgangsmaterials einstellen zu können, da hierdurch die Nachproduktion auf beliebigen Blechtafeln möglich ist, und nicht nur auf dem Restblech der zuletzt durchgeführten Bearbeitung.

Vorteilhafterweise werden durch das CAM-Programmier-system die extrahierten Datensätze durch Bearbeiten und Kombinieren zur Erstellung eines neuen NC-Nachproduktionsprogramms verwendet. Dadurch kann ohne weiteren Bedienereingriff ein NC-Programm erzeugt werden, das automatisch alle ausgewählten nachzuproduzierenden Werkstückteile herstellt und diese auf der jeweiligen Blechtafel verschachtelt.

Besonders vorteilhaft ist bei dem CAM-System, dass das Programmiersystem bzw. der Bediener nicht erneut festlegen muss, mit welchen Werkzeugen (Laser, Stanzwerkzeuge, Umformwerkzeuge etc.) bzw. Werkzeugparametern die Bearbeitung eines ausgewählten Werkstückteils durchzuführen ist, da diese bereits mit Hilfe der im NC-Programm gespeicherten extrahierbaren Daten festgelegt sind und insbesondere bei Einzelteil-NC-Codes der dazugehörige NC-Text direkt extrahiert und zu einem neuen NC-Nachproduktionsprogramm weiterverarbeitet wird. Dadurch ist sichergestellt, dass das nachproduzierte Werkstückteil mit der gleichen Qualität wie die ursprünglichen Werkstückteile produziert wird. Der Bediener muss also nicht wissen, dass beispielsweise ein lasergeschnittenes Werkstückteil besonders langsam bearbeitet werden soll, um hohe Qualität sicherzustellen, oder mit welchen Einstellungen die Stanzwerkzeuge arbeiten, beispielsweise um zu hohen Lärm zu vermeiden oder besonders schnelle Bearbeitungen sicherzustellen, da diese Parameter durch das Weiterverarbeiten der extrahierten Datensätze/des extrahierten NC-Texts erhalten bleiben. Dadurch werden Programmieraufwand und Fehlerquellen vermieden.

Wenn der Bediener die Nachproduktion direkt nach der eigentlichen Produktion startet, hat das Benutzen der gleichen Werkzeuge wie bei der ursprünglichen Bearbeitung neben der gleichen Qualität zusätzlich noch den Vorteil, dass Zeitverluste auf Grund der Werkzeugauswahl vermieden werden. Diese Zeitverluste treten besonders im Stanzbetrieb auf, wo für die gleiche Bearbeitung unterschiedliche Stanzwerkzeuge verwendet werden können, wodurch die Wahrscheinlichkeit hoch ist, dass beim Erstellen eines NC-Nachproduktionsprogramms nach dem Stand der Technik ein automatischer Vorschlag zur Bearbeitungsstrategie zu anderen Werkzeugkombinationen führt als denen, die nach der gerade beendeten Produktion an der Werkzeugmaschine noch gerüstet sind. Der Bediener hat die Wahl, im Programmiersystem die Werkzeuge für die Bearbeitung den an der Werkzeugmaschine noch gerüsteten Werkzeuge anzugleichen oder die Werkzeuge an der Werkzeugmaschine umzurüsten.

Beim erfindungsgemäßen Verfahren nach Anspruch 4 ergeben sich die gleichen Vorteile wie beim oben beschriebenen NC-Programm und CAD/CAM-Programmiersystem.

Schließlich betrifft die Erfindung auch ein Computerprogrammprodukt, welches Codemittel aufweist, die zum Durchführen aller Schritte des erfindungsgemäßen Verfahrens angepasst sind, wenn das Programm auf einer Datenverarbeitungsanlage abläuft.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine bekannte Vorrichtung zur Steuerung einer Werkzeugmaschine;
- Fig. 2: ein bekanntes Verfahren zur Nachproduktion auf einer Werkzeugmaschine;
- Fig. 3a: eine Blechtafel mit verschachtelten, zu produzierenden Werkstückteilgeometrien;
- Fig. 3b: ein erfindungsgemäß aufgebautes NC-Programm;
- Fig. 4: die in Fig. 1 gezeigte Vorrichtung zur Steuerung einer Werkzeugmaschine mit erfindungsgemäßen Unterprogrammiersystemen bzw. Nachproduktionsuntersystemen; und
- Fig. 5: ein erfindungsgemäßes Verfahren zur vereinfachten Nachproduktion an einer Werkzeugmaschine unter Verwendung des erfindungsgemäßen NC-Programms von Fig. 3b.

Die Steuerung von Werkzeugmaschinen erfolgt mit Hilfe numerischer Steuerungen, die im Allgemeinen in drei Steuereinheiten, ein MMC-Bediensystem (Man Machine Communication) als Dateneingabe- und Visualisierungseinheit, eine SPS-Steuereinheit (speicherprogrammierbare Steuerung) und eine NC-Steuereinheit, aufgeteilt sind. Daten und Steuerbefehle werden über das MMC-Bediensystem eingegeben, an die NC-Steuereinheit weitergeleitet, in der NC-Steuereinheit decodiert und nach geometrischen und technologischen Daten (NC-Steuereinheit) und Schaltbefehlen (SPS-Steuereinheit) getrennt weiter verarbeitet. Die NC- und SPS-Steuereinheiten übermitteln den aktuellen Maschinenstatus zur Visualisierung an die MMC-Steuereinheit.

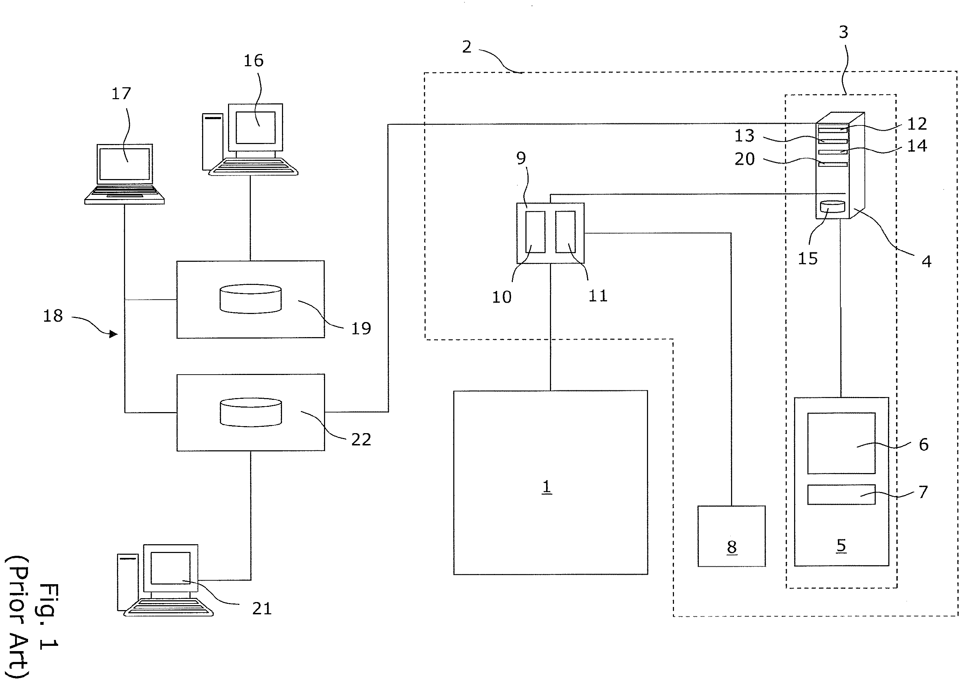

**Fig. 1** zeigt eine bekannte Werkzeugmaschine **1,** die mit Hilfe einer numerischen Steuerungsvorrichtung **2** gesteuert wird. Die Steuerungsvorrichtung 2 umfasst hardwareseitig ein MMC-Bediensystem **3** mit einem als Industrie-PC ausgebildeten Steuerungscomputer **4** und einer Bedieneinrichtung **5** mit einem Bildschirm **6** als Anzeigeeinheit und einer Eingabeeinheit **7,** die bspw. als Tastatur, Maus oder Touchpanel ausgebildet ist. Weiterhin umfasst die Steuerungsvorrichtung 2 eine Maschinensteuertafel **8** zur manuellen Bedienung der Werkzeugmaschine 1, wobei vor allem sicherheitsrelevante Bedienungen ausgeführt werden, und eine NCU-Baugruppe **9** (Numerical Control Unit) mit integrierter NC-Steuereinheit **10** und SPS-Steuereinheit **11.** Die NC- und SPS-Steuereinheiten 10, 11 können auch als separate Baugruppen ausgebildet sein.

Die Steuerungsvorrichtung 2 umfasst softwareseitig eine Bediensoftware **12** zur Steuerung der Werkzeugmaschine 1, Softwaremodule **13** zur Auftragsverwaltung, Werkzeugverwaltung und Palettenverwaltung, eine Programmverwaltung **14** zur Verwaltung von Steuerprogrammen und einen Datenspeicher **15,** in dem standardmäßige Bearbeitungsparameter für die Steuerprogramme gespeichert sind. Der Begriff "Steuerprogramm" umfasst neben dem NC-Programm sämtliche Technologiedaten, die aus dem NC-Programm in externe Datenspeicher ausgelagert sind. Außerdem können weitere Anwendungen, wie bspw. ein Konstruktionssystem, ein Programmiersystem oder ein kombiniertes Konstruktions- und Programmiersystem, auf dem Steuerungscomputer 4 installiert sein.

An der Herstellung eines Bauteils auf der Werkzeugmaschine 1 sind ein Konstrukteur, ein Programmierer und ein Maschinenbediener beteiligt, die zum Teil in Personalunion von einer oder zwei Personen ausgeübt werden können. Die Konstruktion des Bauteils erfolgt mit Hilfe eines Konstruktionssystems 16 (CAD-System) oder eines kombinierten Konstruktions- und Programmiersystems 17 (CAD-/CAM-System), wobei die Abkürzungen CAD und CAM für Computer Aided Design und Computer Aided Manufacturing stehen. Fertige Konstruktionszeichnungen werden auf einer dafür in einem Netzwerk **18** vorgesehenen gemeinsamen CAD-Datenablage **19** abgelegt, auf die die Programmierer bei Bedarf zugreifen können.

Die Werkzeugmaschine 1 wird über Steuerprogramme gesteuert, die mit Hilfe eines Programmiersystems oder manuell an der Bedieneinrichtung 5 des MMC-Bediensystems 3 erstellt werden. Programmiersysteme kennen grundlegende und spezielle NC-Funktionen und wissen, welche Technologiedaten benötigt werden und welche Regeln für die Bearbeitung gelten. Damit können sie die Bearbeitung automatisch definieren und ein Steuerprogramm generieren. Bei dem in Fig. 1 gezeigten Ausführungsbeispiel sind neben dem kombinierten Konstruktions- und Programmiersystem 17 ein weiteres Programmiersystem oder kombiniertes Konstruktions- und Programmiersystem **20** auf dem Steuerungscomputer 4 und ein Programmiersystem **21** (CAM-System) im Netzwerk 18 installiert. Die Programmiersysteme 17, 20, 21 sind mit einer CAM-Datenablage **22** verbunden, auf die die Programmierer und Maschinenbediener zugreifen können. Der Programmierer legt die fertigen Steuerprogramme in der CAM-Datenablage 22 ab. Der Maschinenbediener kann auf die CAM-Datenablage 22 zugreifen und die Steuerprogramme aus der CAM-Datenablage 22 in die Programmverwaltung 14 des Steuerungscomputers 4 importieren.

Bei der Programmierung legt der Programmierer fest, wie ein Bauteil bearbeitet wird. Er bestimmt, welche Werkzeuge eingesetzt werden, in welcher Reihenfolge die Bearbeitung erfolgt, und welche Bearbeitungsparameter bspw. für die Laserleistung und Vorschubgeschwindigkeit gelten. Programmiersysteme unterstützen den Programmierer dabei, geeignete Bearbeitungsparameter und Bearbeitungsstrategien für seine Bearbeitungsaufgabe zu finden. Die Informationen über geeignete Bearbeitungsparameter und Bearbeitungsstrategien sind in sogenannten Technologietabellen und Regelwerken enthalten, die den Datenspeicher 15 definieren. In einer Technologietabelle sind in Abhängigkeit von der Materialart, der Materialdicke und dem Bearbeitungsverfahren geeignete Bearbeitungsparameter für alle relevanten Größen hinterlegt, die eine prozesssichere Bearbeitung ermöglichen. Bei Bedarf werden Technologietabellen in Abhängigkeit weiterer Parameter definiert. Dazu gehört beim Laserschneiden bspw. die Konturgröße, die in klein, mittel und groß unterschieden wird, und der Maschinentyp, auf dem die Bearbeitung erfolgen soll.

Bei Technologietabellen wird zwischen allgemeinen, in der Regel schreibgeschützten Technologietabellen des Maschinenherstellers und kundenspezifischen Technologietabellen unterschieden. Allgemeine Technologietabellen werden vom Maschinenhersteller mit großem Aufwand ermittelt und zusammen mit der numerischen Steuerungsvorrichtung 2 der Werkzeugmaschine 1 an die Kunden ausgeliefert. Kundenspezifische Technologietabellen können von einem Programmierer oder Maschinenbediener angelegt und verändert werden. In kundenspezifischen Technologietabellen sind auf die Bearbeitungsaufgaben eines speziellen Kunden angepasste Bearbeitungsparameter gespeichert. Die in den allgemeinen Technologietabellen gespeicherten Bearbeitungsparameter werden als "standardmäßige Bearbeitungsparameter" bezeichnet. Um diese zu ermitteln, führen Maschinenhersteller unzählige Parametervariationen durch und bewerten die Bearbeitungsergebnisse. Die Entscheidung, welche Bearbeitungsparameter in der Technologietabelle gespeichert werden, hängt unter anderem von den Randbedingungen ab. Soll eine Bearbeitung mit höchstmöglicher Bearbeitungsqualität durchgeführt werden, ergeben sich andere Bearbeitungsparameter als bei einer Bearbeitung mit schnellstmöglicher Geschwindigkeit. Die Bearbeitungsparameter, die ein Maschinenhersteller in allgemeinen Technologietabellen angibt, stellen in der Regel einen Kompromiss verschiedener Randbedingungen, wie Qualität, Prozesssicherheit und Geschwindigkeit, dar.

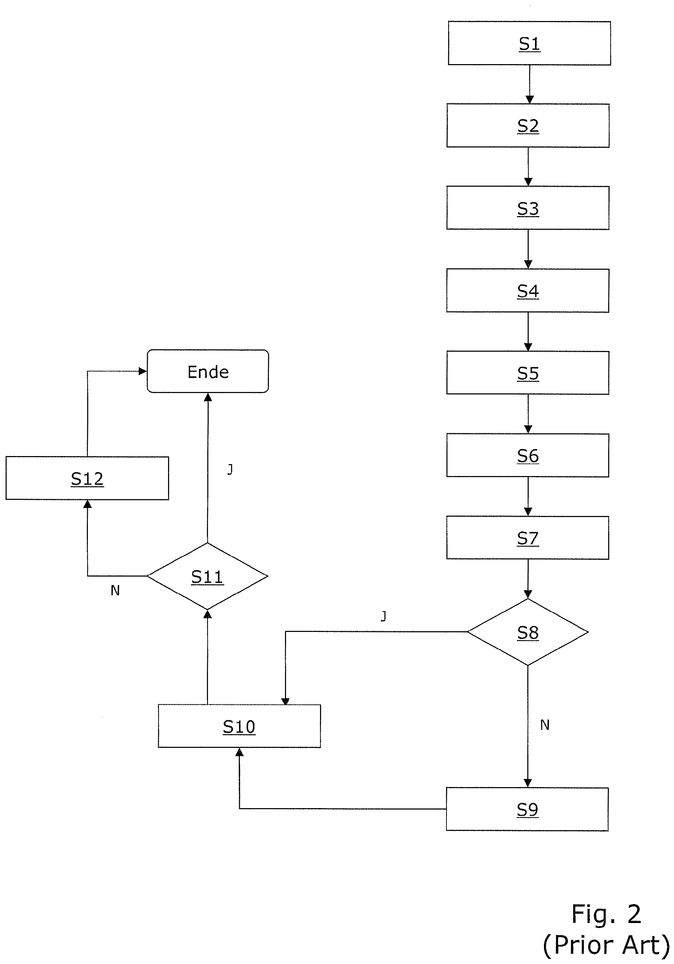

**Fig. 2** zeigt ein Verfahren für die Nachproduktion nach dem Stand der Technik. Nachdem der Maschinenbediener festgestellt hat, dass er mindestens ein Werkstückteil der soeben hergestellten Werkstückteile nachproduzieren muss, öffnet er in einem Schritt S1 eine Remote Desktop-Verbindung zum CAM-Programmiersystem 21. Von dort greift er in einem Schritt S2 auf die CAD-Datenablage 19 zu und sucht manuell die Werkstückteilgeometriedaten (z.B. GEO- oder DXF-Dateien) der nachzuproduzierenden Werkstückteile heraus. In einem Schritt S3 legt er fest, wie viele jeweilige Werkstückteile er nachproduzieren muss. Anschließend legt der Maschinenbediener in einem Schritt S4 die Art des Bleches fest, das er verwenden möchte. Dabei muss er darauf achten, dass er das gleiche Blech einstellt, wie im Auftrag verlangt. In einem Schritt S5 gibt er die Größe der verwendeten Blechtafel ein, so dass in einem Schritt S6 die nachzuproduzierenden Werkstückteile manuell oder mit Hilfe des CAM-Programmiersystems 21 auf die Blechtafel verschachtelt werden. In einem Schritt S7 lässt sich der Bediener vom CAM-Programmiersystem 21 einen Bearbeitungsvorschlag erzeugen, bei dem die verschiedenen verwendeten Werkzeuge, deren Werkzeugparameter (Stanzdruck, Hubart, Laserenergie, -frequenz, Vorschubgeschwindigkeit etc.) und die Entladeart festgelegt werden. In einem Schritt S8 bestimmt der Maschinenbediener, ob er Änderungen an der Werkzeugauswahl oder den Bearbeitungsparametern vornehmen möchte. Sollte er mit der automatischen Werkzeugauswahl nicht zufrieden sein (N in S8), z.B. wenn er bei Stanzbearbeitungen den Werkzeugeinsatz entsprechend der bereits an der Werkzeugmaschine 1 gerüsteten Werkzeuge plant, und sich somit einen Umrüstvorgang ersparen möchte, kann er diese in Schritt S9 anpassen. Auf jeden Fall muss er in Schritt S8 prüfen, ob die Bearbeitung entsprechend der Qualitätsanforderungen des Auftrags geplant ist. Sollte dies nicht der Fall sein (N in S8), kann er in Schritt S9 auch die standardmäßigen Bearbeitungsparameter anpassen und so z.B. durch Herabsetzen der Laserleistung und Absenken der Bearbeitungsgeschwindigkeit eine höhere Qualität der Werkstückteile sicherstellen. Wenn alle Einstellungen vom Maschinenbediener in Schritt S9 getätigt wurden oder keine Änderungen notwendig waren (J in S8), kann der Maschinenbediener mit Hilfe des CAM-Programmiersystems 21 in Schritt S10 ein NC-Programm erzeugen und an den Steuerungscomputer 4 der Werkzeugmaschine 1 übertragen. In einem Schritt S11 startet der Maschinenbediener die Ausführung des NC-Programms. Daraufhin wird geprüft, ob die Werkzeuge entsprechend des NC-Programms gerüstet sind. Sollte dies der Fall sein, beginnt die Abarbeitung (J in S11) und das Verfahren der Nachproduktion endet. Falls festgestellt wird, dass die richtigen Werkzeuge noch nicht gerüstet sind, muss dies der Maschinenbediener in einem Schritt S12 nachholen, woraufhin die Bearbeitung entsprechend des NC-Programms beginnt.

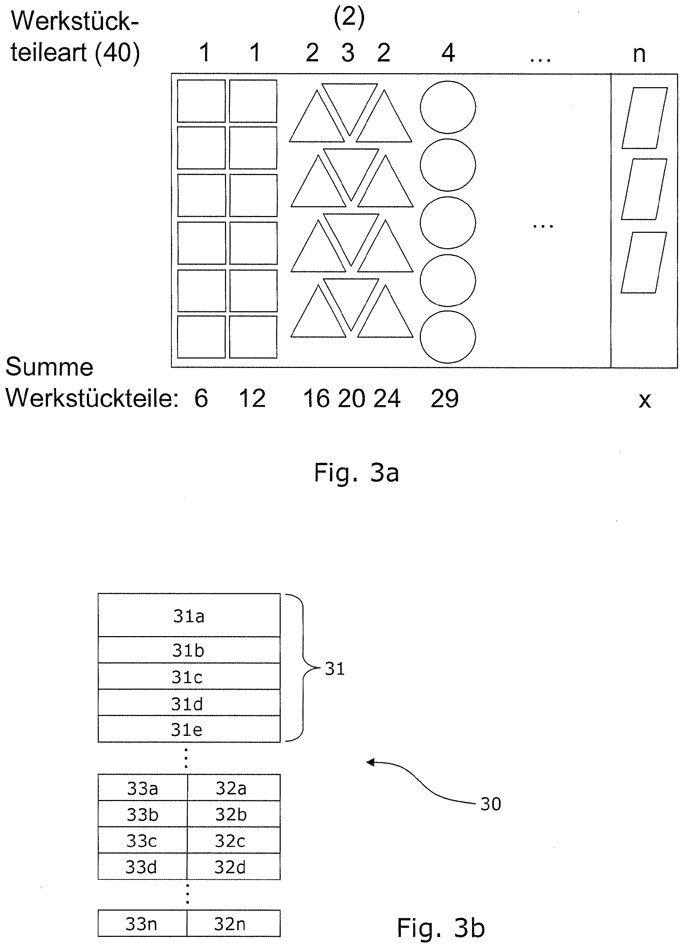

**Fig. 3a** zeigt beispielhaft eine Blechtafel mit darauf verschachtelten Werkstückteilen. Die Gesamtzahl der Gutteile ist x und die Anzahl der verschiedenen Werkstückteilarten **40** ist n. Dabei kann die Werkstückteileart 40,3 (Dreieck nach oben) mit der Werkstückteileart 40,2 (Dreieck nach unten) gleich gesetzt werden, oder nicht.

**Fig. 3b** zeigt den Aufbau eines NC-Programms **30** gemäß der Erfindung. Das NC-Programm 30 enthält die gleichen Grundinformationen eines NC-Programms **31** nach dem Stand der Technik, das in diesem Ausführungsbeispiel den NC-Programmaufbau für eine TRUMPF-Werkzeugmaschine zeigt. Das NC-Programm 31 besitzt ein Hauptprogramm **31a,** sowie Unterprogramme **31b**, **31c** etc. Das Hauptprogramm 31a bereitet die verschiedenen Werkzeuge für deren Benutzung vor und ruft dann die zugehörigen Unterprogramme auf. Die Unterprogramme beinhalten im Falle von Stanzbearbeitungen sämtliche Verfahrwege und Stanzhübe eines einzelnen Stanzwerkzeugs. Diese werden komplett durchgeführt, bevor zum Hauptprogramm zurückgewechselt wird. Im Falle von Laserbearbeitungen sind in jedem Unterprogramm die relativen Verfahrbewegungen zum Schneiden genau einer Kontur hinterlegt.

Somit ist es aus einem NC-Programm 31 nach dem Stand der Technik im Allgemeinen nicht möglich, die damit hergestellten Gutteile eindeutig zu identifizieren. Bei Laserbearbeitungen kann eine geschnittene Kontur der äußeren Kontur eines Gutteils entsprechen. Wenn allerdings mehrere Teile ineinander verschachtelt sind, könnten die inneren Teile sowohl Abfall als auch Gutteil sein. Die Gutteilidentifizierung wird auch dann schnell mehrdeutig, wenn gemeinsame Trennschnitte zwischen Werkstückteilen vorliegen oder der Rand des Bleches einer oder mehrerer Seiten der Werkstückteilaußenkontur entspricht. Beispielsweise ist bei Werkstück n in Fig. 3a nicht ohne weiteres ersichtlich, ob es sich bei dem vertikalen Schnitt lediglich um einen Besäumschnitt handelt oder ob das durch diesen Schnitt entstehende große Rechteck dem Gutteil entspricht und falls ja, ob dann die Parallelogramme Gutteile oder Abfall sind.

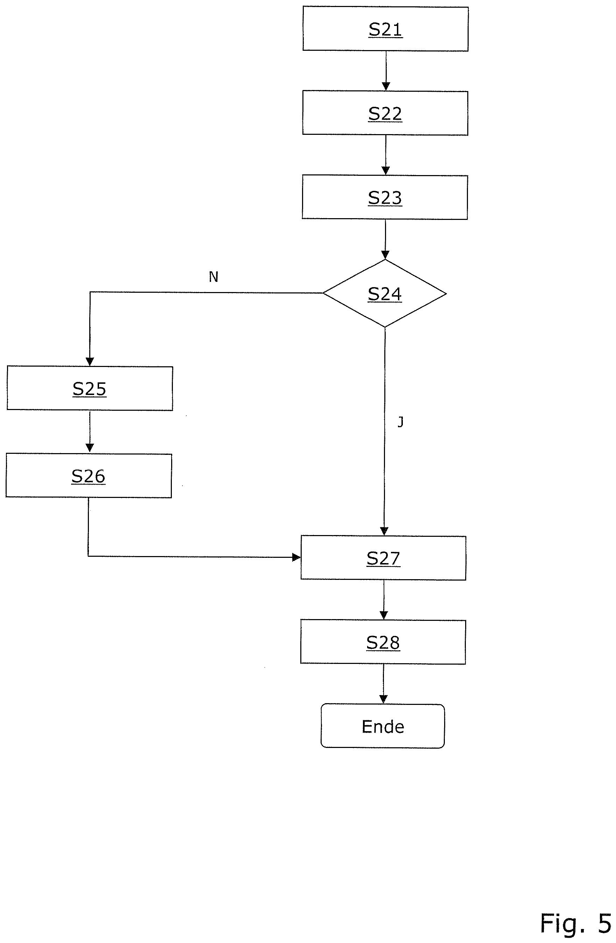

Das NC-Programm gemäß der Erfindung ist zusätzlich mindestens um die extrahierbaren Datensätze **32n** erweitert, in denen alle für die Produktion eines einzelnen, eindeutig definierten Werkstückteils der n-ten Werkstückteileart **40n** notwendigen Werkzeuge und Werkzeugschritte hinterlegt sind. Diese extrahierbaren Datensätze 32n können in Form von vorgefertigten Einzelteil-NC-Codes vorliegen, d.h. die oben genannten Informationen bzgl. des Werkstückteils werden mindestens zum Teil bereits in Form von NC-Programmteilen zusammengestellt. Diese NC-Programmteile können beim Erstellen eines NC-Nachproduktionsprogramms nahezu unverändert übernommen werden. Es sind lediglich Anpassungen z.B. durch Eingabe von Relativverschiebungen der Koordinatenangaben für eine Verschachtelung notwendig. Auch die Bearbeitungsparameter können angegeben werden, so dass für die Bearbeitungen der Nachproduktion nicht nur auf standardmäßige Bearbeitungsparameter zurückgegriffen werden muss. Der extrahierbare Datensatz 32n für eine Werkstückteileart 40n kann durch eine geschlossene äußere Kontur das damit zu produzierende Werkstückteil eindeutig definieren. Vorteilhafterweise sind auch noch Geometriedaten **33n** für jede Werkstückteileart 40 hinterlegt, die im Verfahren von Fig. 5 verwendet werden.

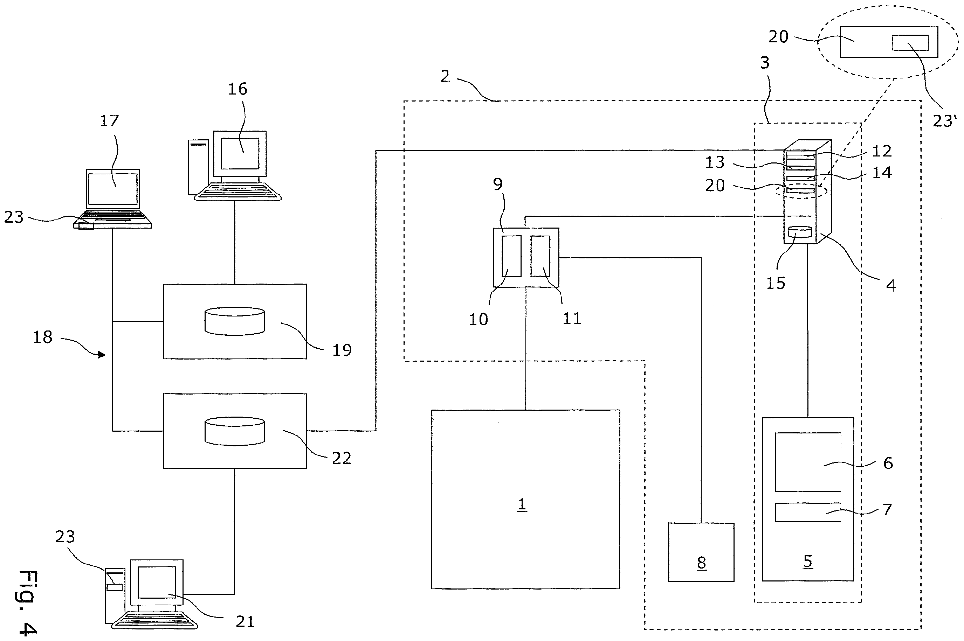

**Fig. 4** zeigt die Vorrichtung zur Steuerung der Werkzeugmaschine 1 aus Fig. 1 inklusive der Untersysteme **23** und **23'.** Das Unterprogrammiersystem 23 erweitert die Programmiersysteme 17 und 21 um die Funktion, ein erfindungsgemäßes NC-Programm 30 nach Fig. 3b für die vereinfachte Nachproduktion zu erzeugen. Im Gegensatz zu Fig. 1 kann das CAM-System **20** ein voll funktionsfähiges Programmier- bzw. kombiniertes Programmier- und Konstruktionssystem sein, aber auch ein vereinfachtes CAM-System, das lediglich zum Erstellen der NC-Nachproduktionsprogramme dient. Wenn es sich um ein vereinfachtes CAM-System handelt, muss das Nachproduktionsuntersystem 23' nicht über die Funktionalität, ein erfindungsgemäßes NC-Programm 30 nach Fig. 3b zu erstellen, verfügen. Das Untersystem 23' verfügt jedoch über die Funktion, ein erfindungsgemäßes NC-Programm 30 nach Fig. 3b auszulesen und daraus mittels CAM-System 20 in einem Verfahren gemäß der Erfindung ein dazugehöriges NC-Nachproduktionsprogramm zu erzeugen. Diese Funktion müssen die beiden Untersysteme 23 nicht aufweisen, es ist jedoch möglich, sie ebenfalls zu integrieren. Dies ist zweckmäßig, wenn sich andere Werkzeugmaschinen im Netzwerk befinden, die über kein CAM-System 20 verfügen, jedoch auf die Programmiersysteme 17 bzw. 21 zugreifen können. Im Folgenden bezeichnet ein Unterprogrammiersystem ein Untersystem 23/23', das auf jeden Fall über die Funktion verfügt, ein erfindungsgemäßes NC-Programm 30 nach Fig. 3b zu erstellen. Ein Nachproduktionsuntersystem ist ein Untersystem 23/23', das auf jeden Fall über die Funktion verfügt, extrahierbare Datensätze 32n zu verwenden, um ein neues NC-Nachproduktionsprogramm zu erstellen. Beide können jedoch optional auch über die jeweils andere Funktionalität verfügen.

**Fig. 5** zeigt ein Verfahren zur Nachproduktion entsprechend der hier offenbarten Erfindung. Nachdem der Maschinenbediener festgestellt hat, dass er mindestens ein Werkstückteil der soeben hergestellten Werkstückteile nachproduzieren muss, startet er in einem Schritt S21 per Knopfdruck am MMC-Bediensystem das Nachproduktionsverfahren. In einem Schritt S22 stellt das Nachproduktionsuntersystem 23' oder 23 (nach Aufbau einer Verbindung zu einem der Programmiersysteme im Netzwerk) dem Maschinenbediener diejenigen Werkstückteile, die mit dem letzten NC-Programm hergestellt wurden, für die Nachproduktion zur Auswahl, indem es entweder die Werkstückteilgeometriedaten 33n aller hergestellten Werkstückarten 40 auflistet, falls diese vorliegen, oder indem es die einzelnen Werkstückteilearten 40 anhand ihrer durch die extrahierbaren Datensätze 32n, bzw. Einzelteil-NC-Codes definierten Bearbeitungen auf dem Bildschirm 6 darstellt. Der Maschinenbediener braucht lediglich aus den aktuell relevanten Werkstückteilen die Teile für die Nachproduktion auszuwählen. Es ist denkbar die Werkstückteile aus einer Liste oder direkt aus einem Bild der bearbeiteten Blechtafel auszuwählen.

In einem Schritt S23 kann der Maschinenbediener die gewünschte Anzahl der ausgewählten, nachzuproduzierenden Werkstückteile angeben. Optional kann das verwendete Untersystem mit seinem zugehörigen CAM-System anschließend in einem Schritt S24 versuchen die notwendigen Bearbeitungsschritte aus den extrahierbaren Datensätzen 32n, bzw. Einzelteil-NC-Codes für alle nachzuproduzierenden Werkstückteile unter Berücksichtigung der jeweiligen Anzahl auf dem Restblech zu verschachteln. Soll diese Prüfung nicht durchgeführt werden oder die Verschachtelung nicht möglich sein (N in S24), wird durch den Bediener in Schritt S25 die Größe des für die Nachproduktion zu verwendenden Bleches eingegeben. Dabei gibt die Abfrage vor, welche Blechart verwendet werden soll, da diese im ursprünglichen NC-Programm 30 bereits festgelegt ist. In einem Schritt S26 werden durch das CAM-System anhand der extrahierbaren Datensätze 32n, bzw. Einzelteil-NC-Codes oder Werkstückteilgeometriedaten 33n die nachzuproduzierenden Werkstückteile auf dem Blech verschachtelt. Das CAM-System erzeugt anschließend in einem Schritt S27 aus den extrahierbaren Datensätzen 32n, bzw. Einzelteil-NC-Codes und den sonstigen, notwendigen Angaben des zuvor verwendeten NC-Programms 30 ein neues NC-Nachproduktionsprogramm und kopiert es, falls notwendig, auf den Steuerungscomputer 4 der Werkzeugmaschine 1. Dabei können die extrahierbaren Datensätze 32n, bzw. Einzelteil-NC-Codes 32n auch Informationen zur Entladung des jeweiligen Werkstückteils enthalten oder auch nicht. Um die Nachproduktion schnell und fehlerfrei zu halten oder wenn keine Entladeinformationen vorhanden sind, wird automatisch eine Handentnahme des Teils programmiert. Das Programmieren einer automatischen Entnahme ist zwar möglich, lohnt sich im Allgemeinen jedoch nicht, da nur wenige Werkstückteile nachproduziert werden müssen. Wenn Informationen zur Entladung der Werkstückteile vorhanden sind, können diese verwendet werden, allerdings müssen dann die nachzuproduzierenden Werkstückteile in der gleichen Winkellage geschachtelt werden, in der sie angelegt sind. Um das Schachteln möglichst einfach zu halten, wird im Allgemeinen jedoch ohnehin auf das Drehen der Werkstückteile verzichtet, so dass wie in Fig. 3a dargestellt Dreiecke nach oben als eine andere Werkstückteileart 40,2 als Dreiecke nach unten (Werkstückteileart 40,3) angesehen werden. Das CAM-System kann bei Verwendung von Einzelteil-NC-Codes 32n das für die Nachproduktion zu erstellende NC-Nachproduktionsprogramm zum großen Teil durch einfaches Bearbeiten (z.B. Anpassen der Einzelteilkoordinaten auf Blechkoordinaten) und Zusammenkopieren der Einzelteil-NC-Codes vorbereiten.

Abschließend kann der Maschinenbediener in einem Schritt S28 die Abarbeitung des NC-Nachproduktionsprogramms starten, ohne dass weitere Vorbereitungen notwendig wären, da die gleichen Parameter und Werkzeuge des ursprünglichen NC-Programms 30 verwendet werden und somit z.B. kein Umrüsten der Werkzeugmaschine 1 notwendig ist. Damit endet das erfindungsgemäße Verfahren.

## Patentansprüche

1. NC-Programm (30) ausgeführt auf einer Laser-, Stanz- oder Laser-Stanz-Kombinationsmaschine (1) zum Bearbeiten mehrerer unterschiedlicher Werkstückteile aus einem flachen Ausgangsmaterial mittels mehrerer unterschiedlicher Werkzeuge, wobei das NC-Programm (30) ein NC-Fertigungsprogramm (31) mit den zum Fertigen der Werkstückteile erforderlichen NC-Programmschritten (31a-31e) aufweist, **dadurch gekennzeichnet,**
**dass** das NC-Programm (30) zusätzlich zum NC-Fertigungsprogramm (31) für alle seine produzierbaren unterschiedlichen Werkstückteile (40n) jeweils einen extrahierbaren Datensatz (32n) in Form von vorgefertigten Einzelteil-NC-Codes aufweist, in dem die für die Nachproduktion eines einzelnen solchen Werkstückteils (40n) notwendigen Arten von Werkzeugen und Werkzeugschritte einschließlich der zugehörigen Bearbeitungsparameter hinterlegt sind.

2. NC-Programm nach Anspruch 1, **dadurch gekennzeichnet, dass** die extrahierbaren Datensätze (32n) jedes unterschiedlichen Werkstückteils (40n) eine geschlossene äußere Kontur des Werkstückteils (40n) definieren.

3. NC-Programm nach Anspruch 1 oder 2, **dadurch gekennzeichnet, dass** der extrahierbare Datensatz (32n, 33n) des NC-Programms zusätzlich Werkstückteilgeometriedaten für alle unterschiedlichen Werkstückteile (40n) aufweist.

4. Verfahren zum Erstellen eines neuen NC-Nachproduktionsprogramms für ein oder mehrere nachzuproduzierende Werkstückteile auf einer Laser-, Stanz- oder Laser-Stanz-Kombinationsmaschine (1) zum Bearbeiten von flachen Ausgangsmaterialien aus einem NC-Programm (30) nach einem der Ansprüche 1 bis 3,
wobei das oder die nachzuproduzierenden Werkstückteile aus den mittels des NC-Programms (30) zuvor produzierten Werkstückteilearten (40n) ausgewählt werden,
wobei dann die extrahierbaren Datensätze (32n) des oder der ausgewählten, zuvor produzierten Werkstückteilearten (40n) aus dem NC-Programm (30) ausgelesen werden und
wobei ein neues NC-Nachproduktionsprogramm für die nachzuproduzierenden Werkstückteile anhand der extrahierten Datensätze (32n) erstellt wird.

5. Computerprogrammprodukt, welches Codemittel aufweist, die zum Durchführen aller Schritte des Verfahrens nach Anspruch 4 angepasst sind, wenn das Programm auf einer Datenverarbeitungsanlage abläuft.

## Claims

1. NC program (30) that is run on a laser machine, a punching machine, or a laser punching combination machine (1) for machining a plurality of different workpiece parts from a flat starting material by means of different tools, wherein the NC program (30) comprises an NC production program (31) with the NC program steps (31a-31e) required to produce the workpiece parts,
**characterised in that**
in addition to the NC production program (31), the NC program (30) comprises for each of the producible different workpiece parts (40n) an extractable data set (32n) in the form of prefabricated individual part NC codes, in which there are stored the types of tools and tool steps including the associated machining parameters, necessary for the post-production of such an individual workpiece part (40n).

2. NC program according to claim 1, **characterised in that** the extractable data sets (32n) of each different workpiece part (40n) define a closed outer contour of the workpiece part (40n).

3. NC program according to claim 1 or 2, **characterised in that** the extractable data set (32n, 33n) of the NC program additionally comprises workpiece part geometry data for all the different workpiece parts (40n).

4. Method for creating a new NC post-production program for one or more workpiece parts that are to be reproduced on a laser machine, a punching machine, or a laser punching combination machine (1) for machining flat starting materials, on the basis of an NC program (30) according to any one of the claims 1 to 3,
wherein the workpiece part(s) to be reproduced is/are selected from the workpiece part types (40n) previously produced by means of the NC program (30),
wherein the extractable data sets (32n) of the selected, previously produced workpiece part type(s) (40n) are read out from the NC program (30) and
wherein a new NC post-production program for the workpiece parts that are to be reproduced is created on the basis of the extracted data sets (32n).

5. Computer program product which has code means that are adapted for the execution of all the steps of the method according to claim 4, when the program is run on a data processing system.

## Revendications

1. Programme CN (30) exécuté sur une machine laser, de poinçonnage ou laser-poinçonnage combinée (1) pour l'usinage de plusieurs pièces différentes à partir d'un matériau de départ plat au moyen de plusieurs outils différents, le programme CN (30) présentant un programme de fabrication CN (31) avec les étapes de programme CN (31a-31e) nécessaires à la fabrication des pièces, **caractérisé en ce**
**que** le programme CN (30) présente, en plus du programme de fabrication CN (31), pour chacune de ses différentes pièces productibles (40n) un jeu de données extractible (32n) sous la forme de codes CN de pièce individuelle préfabriqués, dans lequel sont stockés les types d'outils et étapes d'outil nécessaires à la production ultérieure d'une telle pièce individuelle (40n), y compris les paramètres d'usinage correspondants.

2. Programme CN selon la revendication 1, **caractérisé en ce que** les jeux de données extractibles (32n) de chacune des différentes pièces (40n) définissent un contour extérieur fermé de la pièce (40n).

3. Programme CN selon la revendication 1 ou 2, **caractérisé en ce que** le jeu de données extractibles (32n, 33n) du programme CN présente en outre des données géométriques de pièce pour toutes les différentes pièces (40n).

4. Procédé de création d'un nouveau programme CN de production ultérieure pour une ou plusieurs pièces à produire ultérieurement sur une machine laser, de poinçonnage ou laser-poinçonnage combinée (1) pour l'usinage de matériaux de départ plats à partir d'un programme CN (30) selon l'une des revendications 1 à 3,
dans lequel la ou les pièces à produire ultérieurement sont sélectionnées parmi les types de pièces (40n) précédemment produits au moyen du programme CN (30),
dans lequel les jeux de données extractibles (32n) du ou des types de pièces (40n) sélectionnés, précédemment produits, sont ensuite lus à partir du programme CN (30) et
dans lequel un nouveau programme CN de production ultérieure pour les pièces à produire ultérieurement est créé à partir des jeux de données extraits (32n).

5. Produit programme d'ordinateur qui présente des moyens de code adaptés à mettre en œuvre toutes les étapes du procédé selon la revendication 4 lorsque le programme est exécuté sur un ordinateur.
